# EUROPEAN PATENT APPLICATION

(11) **EP 1 445 909 A1**
(43) Date of publication of application: **11.08.2004**
(21) Application number: 03002833.6
(22) Date of filing: 07.02.2003
(51) Int. Cl.: H04L 29/06

(54) **Application for initiating telecommunications connections system, method and apparatus**

(71) Applicant: SIEMENS AKTIENGESELLSCHAFT, 80333 München (DE)
(72) Inventor: Oman, Mihael, Kranj (SI)

(57) **Abstract**

There is provided a telecommunications network (200) having a Web application (204) that triggers a connection (210) between subscribers (206, 208). Control information (216) is transmitted including information for establishing the connection (210) between the subscribers (206, 208). The connection (210) is established using the control information (216) such that the connection is established directly between the subscribers (206, 208). Management of services is also provided that effects modifications to services via the Web application. The Web application and telephonic services, according to an aspect, are joined to provide transparent switching between Web application functions and telephonic services.

## Description

The invention relates to initiating a telecommunications connection between a calling subscriber A and a called subscriber B from a Web application.

More broadly, the invention relates to developing Web applications that provide services and control functions via the Internet. In the course of developing such Web applications, the inventor discovered that there does not exist an effective call handling strategy for a Web application connection that connects a calling party (A) and a called party (B) in a telephony network, particularly in a Centrex network.

By way of background, Centrex (CTX, Central Office Exchange Service) is a type of Private Branch Exchange (PBX) that offers a set of specialized business solutions for primarily, but not exclusively, voice service. Typically, the telephone company owns and manages all the communications equipment necessary to implement the PBX and then sells various services to the company. The call control and service logic include functions needed to process a telephone call and offer additional telephone features.

The invention further relates to an IP (Internet Protocol) Centrex network. IP Centrex refers to an IP telephony network where Centrex service is offered to a customer as digitized and packetized streams across a broadband access facility. IP Centrex builds on the traditional benefits of Centrex by combining them with the benefits of IP telephony. The details of Centrex and IP Centrex, which are well known, can be found in the well established literature and will not be discussed here in detail. Of course, the invention relates to any type of network having an Internet gateway, including Centrex Time Division Multiplexing (TDM).

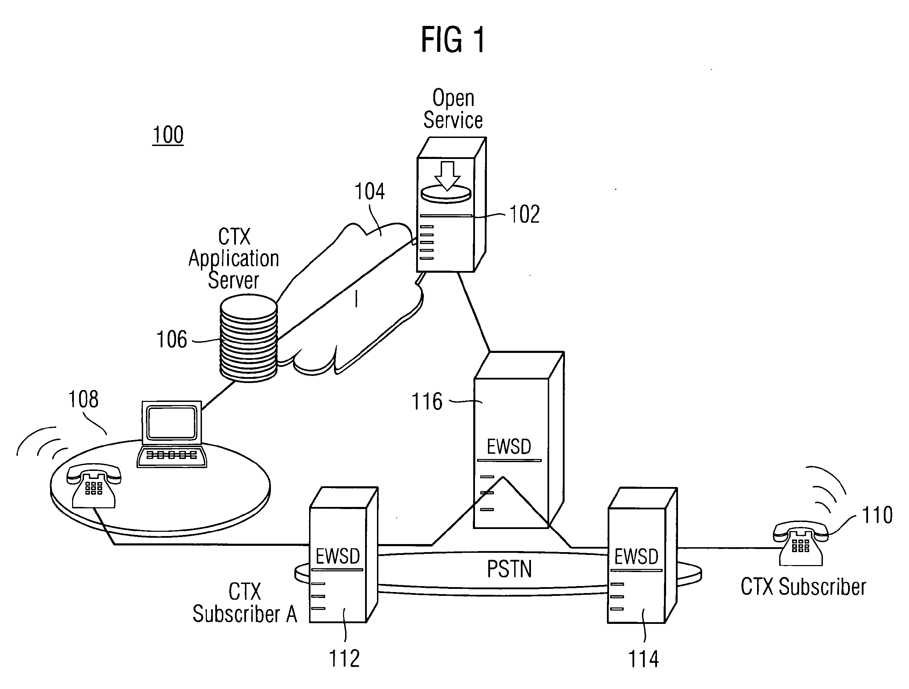

One solution to the problem of connecting subscribers in a Centrex environment may be provided by the illustration shown in Fig. 1, which illustrates, for example, a Centrex Network using EWSD (Electronic Worldwide Switch Digital) 100, a widely-installed telephonic switch system developed by Siemens. EWSD is a modular system in which some switches in the system can be installed in a telephone company's Centrex facility and other switches can be located at the customer. Of course, the invention is applicable to any type of network.

In Fig. 1, there is generally a solution 100 shown having an open service platform 102 that has a capability of forming a basic gateway to the Internet (I) 104 for a CTX Application Server 106. The CTX Application Server 106, for example, may be accessed by a calling subscriber A 108 for providing Web-based telephony applications. On the other end, there is shown a called subscriber B 110.

According to the primitive solution, the basic call is handled by establishing a first leg 112 from an entry point into the network to the calling party (A) 108, which may be provided in part by an EWSD network element. Thereafter, a second leg 114 is established from the entry point into the network to the called party (B) 110, which may similarly be provided by an EWSD network element. Since each leg requires one or more trunks, the proposed solution requires at least two legs to establish the connection between a caller (A) and a caller (B). This is an inefficient use of network resources.

In addition, such a solution would require that the basic call is initiated from a central point. This could be achieved by the central point EWSD network element 116, as controlled by the open service platform 102 in accordance with the Web-based application that is instantiated by the CTX application server 106. This is highly inflexible and cannot be optimized for a particular arrangement of the subscribers. For example, even when caller A and called party B are in the same network, the suggested solution assigns at least two trunks for setting up the connection between A and B. This is not only impragmatic, it makes no sense.

Another disadvantage of the solution shown in Fig. 1 is that a subscription of a corresponding subscriber, A for example, cannot be correlated with a call initiated by a Web application. For this reason, special services or features cannot be obtained from the subscription and applied, or removed, to the subscriber A. Similarly, restrictions of the subscriber A are not accessible and, therefore, cannot be applied or removed. This is quite inflexible.

It is another disadvantage of such a solution that it does not have the capability to initiate a call using a numbering plan. This is because a numbering plan normally requires a mapping to the respective public number. According to such a solution, such a mapping is not available.

What is needed is an effective manner in which a Web application initiates a connection between a calling party A and a called party B in, particularly, a Centrex network. What is not heretofore provided is a manner in which a Web application initiates a connection that does not waste network resources. A solution is needed that is flexible enough to connect the subscribers in consideration of the network state. What is needed is the capability to initiate a connection such that services and features are deliverable and removable and, furthermore, the capability to utilize a numbering plan with such an initiated connection.

It is an object of the invention to provide an effective manner in which a Web application initiates a connection between a calling party A and a called party B.

It is another object of the invention to provide such a connection in a Centrex network.

It is further an object to provide a manner in which a Web application initiates a connection that does not waste network resources.

An additional object of the invention is to provide a solution that is flexible enough to connect the subscribers in consideration of an arrangement of the subscribers.

Furthermore, it is an object of the invention to provide a capability of initiating a connection such that services and features are deliverable and removable.

Yet another object of the invention is to utilize a numbering plan with such an initiated connection.

In accordance with the foregoing objectives of the invention, there is provided a telecommunications network having a web application that triggers a connection between subscribers. Control information is transmitted including information for establishing the connection between the subscribers. The connection is established using the control information such that the connection is established directly between the subscribers.

Further, a gateway, that forms the interface between the web application and the telecommunications network, initiates a call to one of the subscribers.

Then, the gateway releases the call initiated such that there is a minimum number of legs between the subscribers for establishing the connection.

There is also provided managing a service of one of the subscribers by sending control information for managing the service from the web application to a respective subscriber exchange. Managing the service may further comprise modifying code using the web application representative of the service to be managed.

A telecommunications system is further provided for establishing a connection between subscribers. A Web application triggers the connection between the subscribers. A gateway interfaces the Web application to the telecommunications network. An exchange of at least one of the subscribers, wherein the Web application transmits control information including information, establishes the connection between the subscribers to the exchange and the exchange establishes the connection using the control information such that the connection is established directly between the subscribers.

The telecommunications system may be a Centrex network. And, the exchange may be an EWSD exchange. There may also be provided a graphical user interface for managing services of one of the subscribers.

In on aspect, the telephonic services and the Web application of one of the subscribers are joined such that services are transparently switched between web and telephonic services.

The present invention shall be better understood with reference to the following figures in which one or more embodiments are illustrated and described in the detailed description.
- Fig. 1: is a schematic diagram of a basic connection;
- Fig. 2: is a schematic diagram for initiating a connection of the present invention;
- Fig. 3: is a flow diagram for initiating a connection according to the present invention;
- Fig. 4: is a logical representation according to the present invention;
- Fig. 5: is a schematic diagram of an aspect according to the present invention;
- Fig. 6: is a flow diagram for managing services according to the present invention;
- Fig. 7: is a schematic diagram of another aspect according to the present invention; and
- Fig. 8: is a schematic diagram of another aspect according to the present invention.

### Detailed Description

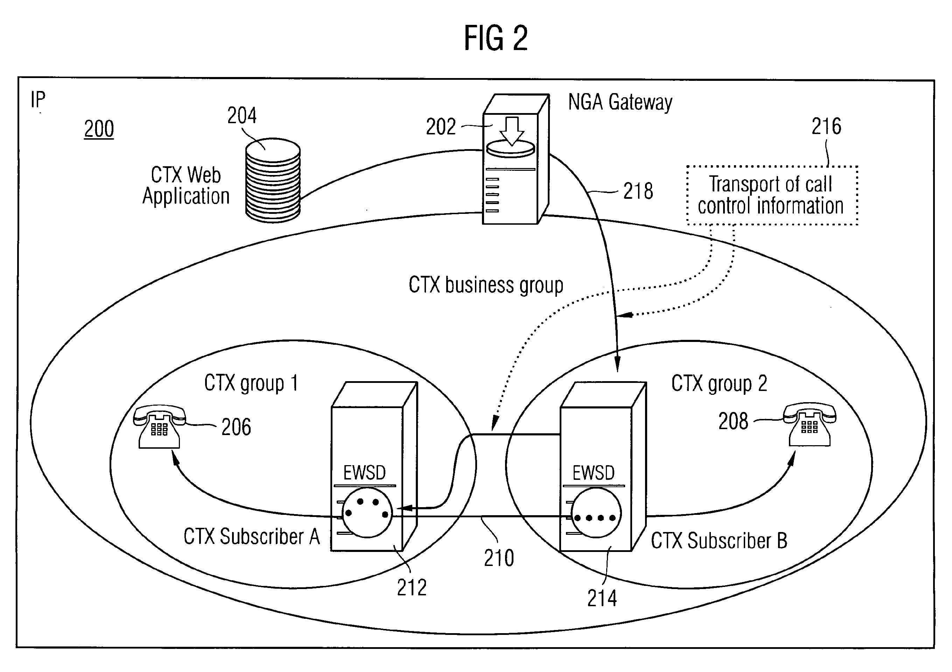

The invention will now be described in more detail in reference to Fig. 2. In the figure, there is shown the exemplary telecommunications network 200 wherein a gateway 202 handles the set up of a connection triggered by an application 204. As shown, a calling subscriber A 206 is connected to a called subscriber B by a single leg 210. The physical connection is established with the aid of a network element 212 on the subscriber A side and a network element 214 on the subscriber B side.

In one arrangement, the invention relates to a CTX environment. As illustrated, a CTX business group comprises a first CTX group (CTX group 1) and a second CTX group (CTX group 2). The Web application 204 and the gateway 202 can be physically located anywhere on the Internet, at a telecom operator/provider, at the service provider or in a customer company, for example. Indeed, the Web application may also be a Local Area Network (LAN) application, such as an Intranet application. Further, the illustration shows that the environment may be part of a Public Switched Telephone Network (PSTN). In any event, it has already been stated that the network is merely an example and may actually comprise any type of telecommunications network.

In operation, the Web application 204 triggers the connection. This causes the gateway 202 to output information 216, hereinafter referred to as "Call Control Information", which is used for setting up a connection between the network elements. The information may be stored as part of a database at the Web application or accessed by the gateway. In the aspect illustrated, the content of the Call Control Information includes, for example, at least the Calling Party Number and the Called Party Number.

The Call Control information 216 is first sent to the gateway 202. The gateway 202 then initiates a call 218 using the Called Party Number, or similarly the Calling Party Number, from the Call Control Information 216. The signalling of the call 218 transmits (or routes) the Called Party Number to the port 206 where the Calling Party, corresponding to the Calling Party Number, is subscribed. Next, the transported Called Party Number is used, in conjunction with the network element 212, to initiate the connection between the subscribers A an B. At this time, the network element 212 has all the information it requires to connect the subscribers according to known connection procedures. In the meantime, the call 218 initiated by the gateway 202 is released.

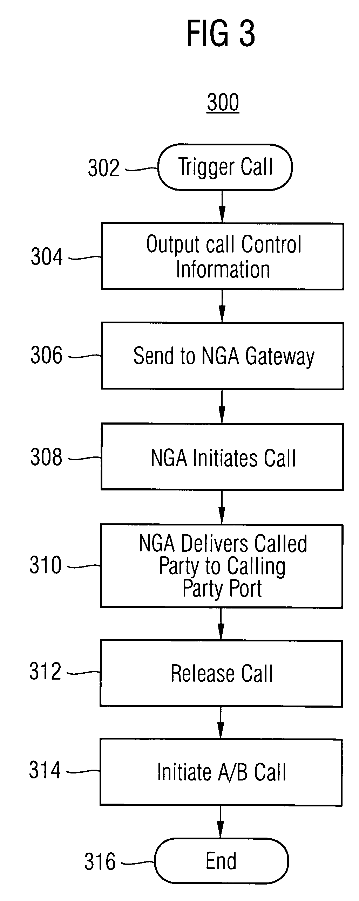

Now with reference to the flow diagram of Fig. 3, the novel process of the invention will be described. In step 302, the call is triggered. The information for the connection is output in step 304 and is forwarded to the gateway in step 306. The gateway initiates a call in step 308. In step 310, the gateway delivers the called party number to the calling party port. At any time thereafter the gateway releases the call in step 312. With the information supplied by the call from the gateway, the local network element initiates the connection between the parties A & B in step 314 and the process ends in step 316.

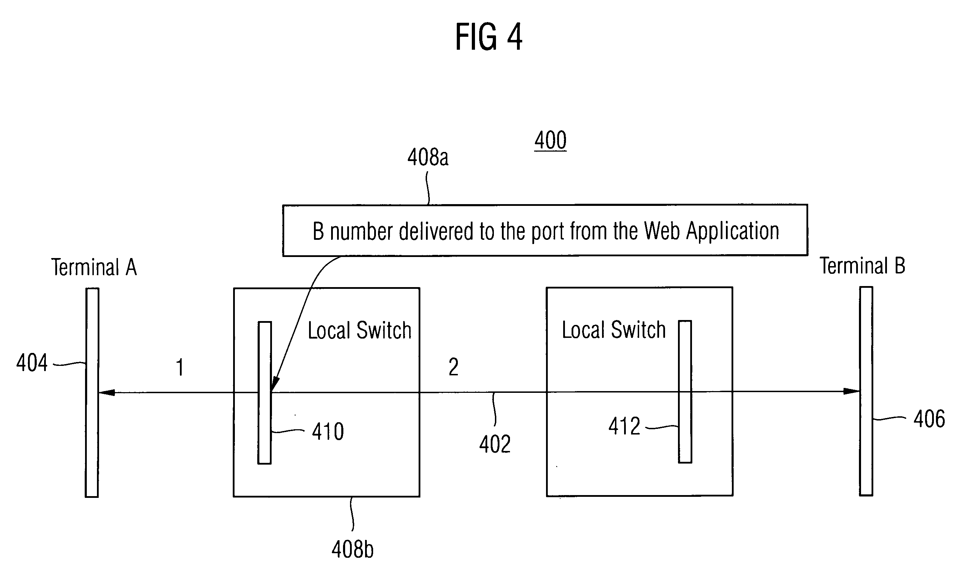

As shown by the logical representation 400 of Fig. 4, the invention as described results in establishing a single leg 402 between the subscribing parties 404, 406. Thus, the invention optimizes network resources. As shown, the information 408a, 408b is routed to the local switch 410, which utilizes the information to establish the connection to the local switch 412. Of course, additional legs can be added in the case, for example, that the subscribing parties may be in other networks. The manner in which connecting legs are routed to other networks is well known. The result of the invention is that the minimum number of legs is established between the subscribing parties. In the case of subscribers of the same network, this means that a single leg is established. That is, calls are established directly between the subscribers. In this manner, the invention provides a flexible solution that takes into account the relation of the subscribers.

It was earlier mentioned that the Web application triggers the process for connection. The invention contemplates that, in addition to the subscriber or user triggering the connection, the application automatically triggers the connection. The invention, therefor, provides subscriber services that are actuated, at least in part, using the web application. In addition, and as will be later described, the invention also comprises managing such services.

As an example, the invention provides a Call Completion on Busy Signal (CCBS) service that allows the subscriber A to complete a call to B when B's telephone responds with a Busy Signal. The service may be incorporated in the Web application. In this case, the CCBS service takes control after A hangs up her telephone. According to the invention, the Web application operates in accordance with the foregoing description to trigger the connection between the subscribers. This is done until the telephone at subscriber side B is no longer busy. At this time, subscriber A is alerted to pick up his receiver and the call is completed.

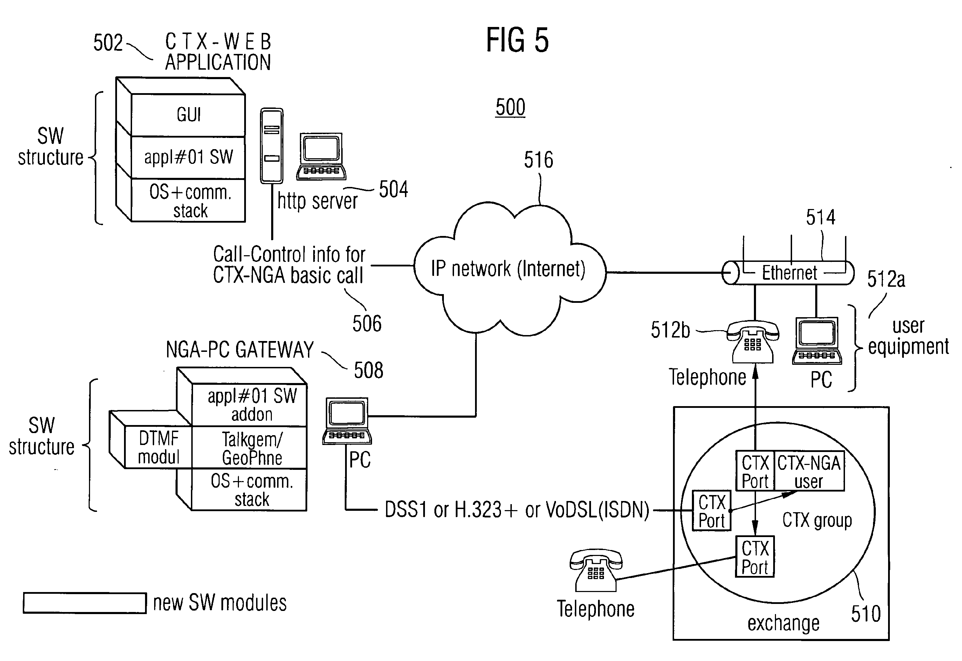

As already mentioned, the invention provides that the user may initiate the basic call from a personal web portal. This is illustrated by the system 500 shown in Fig. 5, wherein the user (not shown) accesses the Web application 502 using a terminal 504. Similar to that already described, the Web application 502, in response to user control, sends the Call Control Information 506, via the gateway 508, to the A subscriber exchange 510.

In addition, the invention provides the A subscriber with the ability to evaluate the Call-Control Information 506 and to manage how the connection is to be achieved. For example, with this arrangement it is provided that the user connects the call through her computer 512a, which may be a Personal Computer (PC), instead of using the standard telephone 512b. The computer 512a may be connected through an appropriate interface (not shown) to the exchange 510, on the one hand, and to the Web application 502 through an appropriate Ethernet interface 514 connecting to the Internet 516 on the other. It shall be appreciated that the user can utilize existing terminal equipment, based on all supported access types, with this invention.

The invention further provides automated call handling capability without the need to map the called number. This is implemented by the Web Application, for example, which handles the calls using a numbering plan available from the network. In this manner, the Web application is related to IP CTX, CTX (TDM) or any type of access supported by the network 500. In principle there are no limits about the type of access by called/calling party subscriber. They can be TDM, VoDSL or H323 based accesses. In addition, the invention can interface to any exchange, including a non-CTX port.

Further, the invention also provides for alternative Control Information control. In one aspect, for example, the Web application accesses a Subscriber Input Code (SCI), instead of a Called Party Number. The SCI may be obtained from an SCI database. In that case, the Web application and/or user can manage or modify the SCI database. The Web application follows the appropriate course of action to execute the selected SCI.

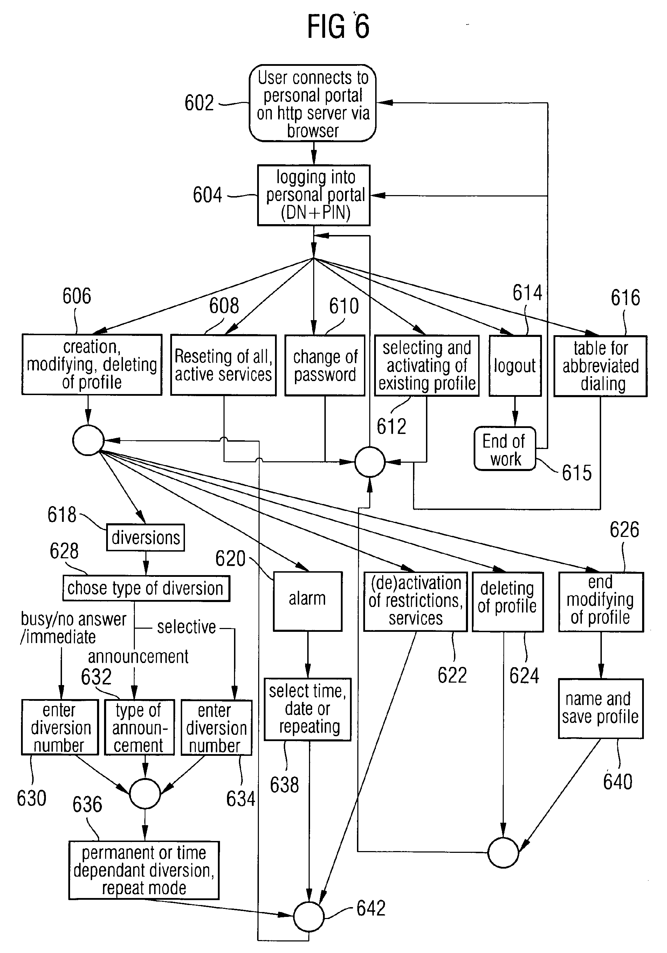

As will be described in more detail with reference to Fig. 6, the invention also contemplates providing a user with a capability to manage his or her telephone service through a personal web portal. For this purpose, the user may employ a PC 512a (Fig. 5a) with access to'the WEB application 502. For making telephone calls, the user may use existing terminal equipment based on all supported access types. In the example described, the WEB application is located on a Hyper Text Transfer Protocol (HTTP) server. When the user wants to manage his telephone service, he connects to a web page stored on the HTTP server. After successful authentication, she is able to access services for his telephone.

In the invention, groups of services are saved into profiles. With this arrangement, the invention provides the capability to manage the services. For example, the user may effect changes between different sets of services simply by exchanging information in the profile. In addition, the user is able to add/delete or modify services. For example, the profiles may include settings for time dependant activation or deactivation of services.

When a user activates (deactivates) a desired set of services (profile), the Web application transmits necessary information to the gateway to activate (deactivate) the service. This may include the Call Control Information. This may further include code relating to the service. In the present invention, For time dependant activation (deactivation) of services, the Web application transmits the information at a time consistent with the service activation (deactivation) time. In the exchange 510 (Fig. 5), the service codes for controlling the services are evaluated and changes the database accordingly.

In one aspect, the invention utilizes the known RSCI service definitions. In that case, the invention employs a virtual PBX for RSCI, which handles the changes to the database for the CTX port. In existing EWSD/hiQ9200 exchanges there is already provided such RSCI definitions and no extensive modifications are necessary. Thus, in such a scenario, only the http server (Web application) and the gateway software would need to be implemented. It shall be appreciated, therefore, that the solution of the present invention is independent of the exchange manufacturer.

Now with respect to the flow diagram shown in Fig. 6, there is set forth one concept of how management is to be performed according to the present invention. In one aspect, the services are managed by way of a Graphical User Interference (GUI) (504a, Fig.5) according to the process 600 shown in Fig. 6. It shall be appreciated that one skilled in the art would know how to program the below-described features.

In the figure, the user connects to her personal portal in step 602 and logs in using her personal ID and password in step 604. Then, the GUI provides a layer of managing functions in steps 606-616, which may be represented, for example, in a main menu of the GUI.

In step 606, the GUI (and associated Web application) provides for the creation, modifying and deletion of a profile, i.e., service. Before turning to the more involved steps comprising this selection, the remaining main menu functions will be discussed. In step 608, the active profiles are reset, which is similar to restoring a default for the services. Step 608 which clears all activated services. Step 610 allows the user to change her password. Step 612 selects and activates existing profiles, for example, Call Waiting (CW) and Call Waiting Internet Busy (CWIB). In step 614, the user is able to log out and work ends in step 615.

In step 616, the invention provides an Abbreviated Dialing (ABBD) capability. The Web application collects the Abbreviated numbers-codes, corresponding to telephone numbers and their descriptions, in a table. When the user visits his personal portal for the first time, he already has some inputs in the Abbreviated Dialing Table. These inputs are common inputs for the group to which the user belongs. For example, default inputs may be prepared by the http server administrator. In addition, the user, using the GUI provided by the invention for example, defines her own Abbreviated dialing codes. The user can, for example, add or delete codes from the Abbreviated Dialing Table. With Abbreviated Dialing, the user does not need to remember all Abbreviated Dialing Codes.

Now with respect to creating, modifying and deleting a profile (i.e., service) in step 606, there are provided several features. Some of the exemplary features for the management of profiles will be discussed with reference to steps 618-626, although there are certainly other features which are within the scope of the invention.

In step 618, there is provided the capability to set diversions. In the flow diagram shown, the user is requested in step 628 to select between various types of diversions. These may be, for example, diversion on busy signal, on no answer or immediate (i.e., automatic) diversion. In such cases, the user is requested to enter a diversion number in step 630. If the user selects an announcement type of diversion, the user is requested to either input an announcement or select one from predetermined announcements in step 632. The invention also provides in step 634 that diversions can be activated for selected time frames (such as date or time). They may even be set as repeated events (e.g. every day, from / to) as provided by step 636.

It is contemplated by the invention that there may be provided additional bells and whistles for diversion. For example, there may be provided a screening diversion list that can be used for the filtering of diverted calls. With such a feature, the usr may divert calls based on predetermined selections of callers. There may also be provided the capability to reset the screening list. In addition, the delay feature already described can be employed to set a delay after a diversion is performed. These and other features not described here are within the scope of the invention.

It shall be appreciated that the time dependant features of the invention can be synchronized with MS Outlook, for example. That said, the invention may interface with any local application. This is made possible by the invention because the Web application may be coupled to the user's terminal. Thus, it is a relatively simple program solution to couple the MS Outlook database with the Web application of the present invention for the purpose of controlling or synchronizing data, such as telephone number or timing data. The invention may for example, import telephone numbers from the contact list of MS Outlook. In addition, the invention may import timing data, such as when the user is out of the office from the calendar of MS Outlook, in order to control handling of incoming calls.

In step 620, the invention provides an alarm feature, which may include different types of alarms, for example. A casual alarm provided allows a subscriber to cause an alarm when a call is made to the line. For example, a casual alarm may be set "within the next 24 hours" at a time or times specified in advance. A daily alarm allows a subscriber to set an alarm when a call is made to the line regularly at the same time and/or on consecutive days and/or for a specified number of days indicated in advance by the user. A specific alarm allows a subscriber to set an alarm when a call is made to the line regularly at the same time on specified days of the calendar week for a specified number of weeks. The time, the days of the calendar weeks and the number of weeks are specified in advance by the user in step 638.

In step 622, there is provided the capability to set restrictions on the subscription. These may be of any sort, including restrictions on Anonymous Call Rejection, Calling Line ID Presentation, Calling Name ID, Connected Line ID, Diverted Call Rejection, Subscriber Traffic, Reverse Charge Security, or any restrictions on Subscriber Codes Input (SCI).

In step 624, the user deletes a profile. This may be achieved, for example, by deleting the code from an associated database of the Web application.

Finally, in step 626 the user ends modifying the services and the changes are saved in step 640. In step 642, the process ends.

As already mentioned, the services may conform to the SCI protocol. In this instance, the invention inserts the SCI code into the Call Control Information in order to activate the corresponding service. When the Call Control Information with an SCI code is received by the exchange (510, Fig. 5), the code is employed to affect the database for the user CTX port. To that end, services are selected using the personal web portal already described. Of course, the services are not limited to SCI in the invention and may conform to other protocols, such as RSCI.

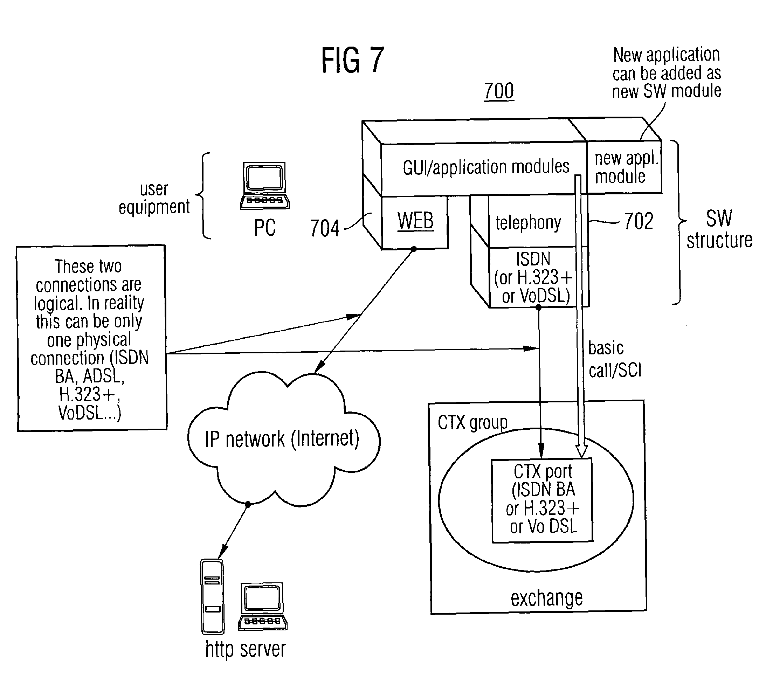

The arrangement in Fig. 7 will now be discussed. Similar features shown in Fig. 5 will not be repeated here. By contrast, the invention here provides the novel concept of joining web and telephony services on one access port. As will be appreciated from the figure, user communication equipment is now joined in one network connected PC 700. The user may utilize, for example, a PC head piece (i.e., headphones and microphone) for voice services. The user PC may be physically connected to an access port (such as ISDN BA, ADSL, H.323, VoDSL (ISDN), for example).

Self-managing of telephony services (SCI) and making of basic calls is done through the telephony part 702 of Fig. 7. Other web services (e.g. from other service providers) are accessed through the Web portion 704. The GUI automatically switches between web or telephony services. As such, the services (or transport technology for that matter) are completely transparent to the user. From the user point of view, telephony and web services are joined or converged.

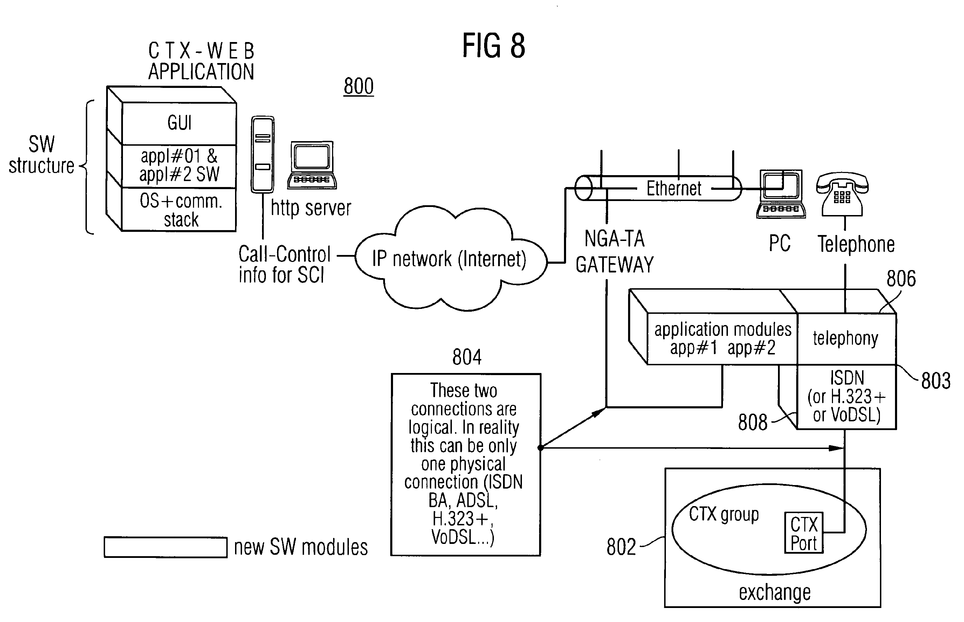

In another variation 800 of the invention, there is shown in Figure 8 that the Call Control information is sent to the subscriber's port 802, i.e., to the adapter 803, completely within the IP environment. With this arrangement, additional CTX Web applications 804 may be used on the subscriber's access port. In place of a gateway, an adapter is used in this variation to assure an interface between the subscriber protocol for telephony 806 (ISDN, H323+, VoDSL, etc.) and the IP protocol to transfer the "Call Control info" from/to the CTX-Web Application 804. Of course, the subscriber can use the existing, or standard, terminal equipment therewith.

With this arrangement, the invention enables CTX Web applications based on a modification of the subscriber's database. Further, activation of the call may be based according to predetermined functions, such as a CTX_NGA Basic call feature. This variation also allows activation of features during a call. In addition, the application can monitor and provide statistics of incoming and outgoing calls. To the user, the handling of the call is transparent and is conducted in the same manner as already described.

With the present invention there is provided an effective manner in which a Web application initiates a connection between a calling party A and a called party B in, particularly, a Centrex network. The novel Web application initiates a connection that optimizes network resources. Further, the invention is flexible and is capable of connecting subscribers in consideration of the network state. There is also provided management of services such that services and features are deliverable and removable without the necessity of utilizing a numbering plan. In addition, a converged telephony-web system is provided that is transparent to the user.

## Claims

1. In a telecommunications network having a web application that triggers a connection between subscribers of the telecommunications network, comprising the steps of:
transmitting control information (310) including information for establishing the connection between the subscribers; and
establishing the connection (314) using the control information such that the connection is established directly between the subscribers.

2. The method according to any of the preceding claims further comprising the step of initiating a call (308) by a gateway, that forms an interface between the web application and the telecommunications network, to one of the subscribers.

3. The method according to claim 2 further comprising the step of releasing the call (312)initiated by the gateway such that there is a minimum number of legs between the subscribers for establishing the connection.

4. The method according to any of the preceding claims further comprising the step of managing a service (606) of one of the subscribers by sending control information for managing the service from the web application to a respective subscriber exchange.

5. The method according to claim 4 wherein the step of managing a service further comprises modifying code (606) using the web application representative of the service to be managed.

6. A telecommunications system(200) for establishing a connection between subscribers (206, 208) of the telecommunications system (200), comprising:
a web application (204) that triggers the connection (210) between the subscribers (206, 208);
a gateway (202) for interfacing the web application to the telecommunications network (200); and
an exchange of at least one of the subscribers, wherein the web application sends control information (216) including information for establishing the connection (210) between the subscribers (206, 208) to the exchange and the exchange establishes the connection (210) using the control information (216) such that the connection (210) is established directly between the subscribers.

7. The telecommunications system (200) of claim 6, wherein the telecommunications system (200) is a Centrex network.

8. The telecommunications system (200) of any of claims 6 and 7, wherein the exchange is an EWSD exchange (212).

9. The telecommunications system (200) of any of claims 6-8, wherein the web application includes a graphical user interface (504a) for managing services of one of the subscribers.

10. The telecommunications system (200) of any of claims 6-9, wherein the telephonic services (702) and the web application (704) of one of the subscribers are joined such that services are transparently switched between web and telephonic services.

11. The telecommunications system (200) of claims 6-10, wherein the gateway is an adapter (803) that resides at a calling subscriber's port such that the web application may be executed from the subscriber's port.
